# EUROPEAN PATENT SPECIFICATION

(11) **EP 3 951 932 B1**
(45) Date of publication and mention of the grant of the patent: **29.01.2025**
(21) Application number: 20873049.9
(22) Date of filing: 29.09.2020
(51) Int. Cl.: H01M 4/13, H01M 4/62, H01M 10/052, H01M 4/131, H01M 4/02, H01M 4/525

(54) **POSITIVE ELECTRODE AND SECONDARY BATTERY INCLUDING THE SAME**
POSITIVELEKTRODE UND SEKUNDÄRBATTERIE DIE GLEICHE ENTHALTEND
ÉLECTRODE POSITIVE ET ACCUMULATEUR LA COMPRENANT

(30) Priority: 04.10.2019 KR 20190123144
(43) Date of publication of application: 09.02.2022
(60) Divisional application: 24194908.0
(73) Proprietor: LG Energy Solution, Ltd., Seoul 07335 (KR)
(72) Inventor: KIM, Tae Gon, Daejeon 34122 (KR); BAEK, Joo Yul, Daejeon 34122 (KR); LEE, Dong Hun, Daejeon 34122 (KR); KWAK, Min, Daejeon 34122 (KR)
(74) Representative: Hoffmann Eitle
(86) International application number: PCT/KR2020/013398
(87) International publication number: WO 2021/066560

(56) References cited:
- CN-A- 108 878 771
- KR-A- 19990 085 021
- KR-A- 20180 055 230
- KR-A- 20190 001 566
- KR-A- 20190 001 566
- KR-A- 20190 064 462
- US-B1- 6 183 714
- US-B1- 6 183 714

## Description

### TECHNICAL FIELD

The present invention relates to a positive electrode and a secondary battery including the same.

### BACKGROUND ART

Demand for batteries as an energy source has been significantly increased as technology development and demand with respect to mobile devices have recently increased, and a variety of researches on batteries capable of meeting various needs have been carried out accordingly. Particularly, as a power source for such devices, research into lithium secondary batteries having excellent lifetime and cycle characteristics as well as high energy density has been actively conducted.

A lithium secondary battery denotes a battery in which a non-aqueous electrolyte containing lithium ions is included in an electrode assembly which includes a positive electrode including a positive electrode active material capable of intercalating/deintercalating the lithium ions, a negative electrode including a negative electrode active material capable of intercalating/deintercalating the lithium ions, and a microporous separator disposed between the positive electrode and the negative electrode.

Since conductivity of the positive electrode may not be secured only by the positive electrode active material, resistance of the battery may be excessively high, and thus, the positive electrode typically additionally includes a conductive agent. Typically, a point-type conductive agent, such as carbon black, has mainly been used, and a line-type conductive agent, such as carbon nanotubes and carbon nanofibers, has also been used to improve capacity of the battery by further improving the conductivity.

A single-walled carbon nanotube is one of the line-type conductive agents, and conductivity in a positive electrode active material layer is improved due to its thin and elongated shape. Thus, typically, after a dispersion including single-walled carbon nanotube units, in which the single-walled carbon nanotube units were present in a single strand form by completely dispersing the single-walled carbon nanotubes, was prepared, a positive electrode slurry was prepared by using the dispersion, and the positive electrode active material layer was prepared by using the positive electrode slurry. Accordingly, the single-walled carbon nanotubes exist as a unit (single strand) in the positive electrode active material layer. However, since the single-walled carbon nanotube unit is easily broken, the single-walled carbon nanotube unit is difficult to smoothly perform a buffering role that suppresses damage (e.g., breakage) of the positive electrode active material in a rolling process during the preparation of the battery, and thus, the damage of the positive electrode active material is accelerated. Also, since the single-walled carbon nanotube units have a small diameter and are easily broken, the units block a space between the positive electrode active materials, and thus, porosity of the positive electrode active material layer is low and mobility of an electrolyte solution may be suppressed to reduce a lithium ion diffusion rate.

In a case in which carbon nanotubes are used as a conductive agent, a carbon nanotube dispersion having a low solid content must be used in order to uniformly arrange the carbon nanotubes in the positive electrode active material layer. However, if the carbon nanotube dispersion having a low solid content is used, there is a problem in that positive electrode adhesion and electrical conductivity are significantly reduced due to the occurrence of a migration phenomenon in which a binder and the conductive agent, which have relatively lower density than the positive electrode active material, easily move to an upper portion of the positive electrode active material layer (direction away from a current collector) during drying of the positive electrode.

Thus, in the present invention, a positive electrode capable of minimizing the damage of the positive electrode active material during rolling and minimizing the problem caused by the migration phenomenon of the binder is introduced.

CN 10887877 A and KR 10-2019-0001566 A disclose positive electrodes comprising a current collector and an active material layer comprising carbon nanotubes.

### DISCLOSURE OF THE INVENTION

### TECHNICAL PROBLEM

An aspect of the present invention provides a positive electrode which may minimize damage of a positive electrode active material and may improve input/output characteristics and life characteristics by minimizing a problem caused by a migration phenomenon of a binder.

Another aspect of the present invention provides a secondary battery including the positive electrode.

### TECHNICAL SOLUTION

According to an aspect of the present invention, there is provided a positive electrode which includes a positive electrode collector, a first positive electrode active material layer which is disposed on the positive electrode collector and includes a first positive electrode active material, and a second positive electrode active material layer disposed on the first positive electrode active material layer, wherein the second positive electrode active material layer includes a second positive electrode active material and carbon nanotube structures in which 2 to 5,000 single-walled carbon nanotube units are bonded side by side in each carbon nanotube structure, wherein the carbon nanotube structures are included in an amount of 0.01 wt% to 1.0 wt% in the second positive electrode active material layer, and wherein the carbon nanotube structures are interconnected in the second positive electrode active material layer to form a network structure.

According to another aspect of the present invention, there is provided a secondary battery including the positive electrode.

### ADVANTAGEOUS EFFECTS

With respect to a positive electrode according to the present invention, since a second positive electrode active material layer directly under pressure during rolling includes a carbon nanotube structure in the form of a long rope in which 2 to 5,000 single-walled carbon nanotube units are bonded side by side, the carbon nanotube structure may strongly hold positive electrode active materials together while connecting the positive electrode active materials, and the carbon nanotube structure may properly disperse the pressure during the rolling. Accordingly, damage of the positive electrode active materials may be minimized. Also, since the positive electrode has a first positive electrode active material layer and a second positive electrode active material layer which are sequentially disposed as each of slurries, the above-described migration phenomenon of binder and conductive agent may be minimized. Accordingly, input/output characteristics and life characteristics of a battery may be improved.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIG. 1 is scanning electron microscope (SEM) images of a multi-walled carbon nanotube unit (A) used in a comparative example and carbon nanotube structures (B, C) used in examples of the present invention.
FIG. 2 is transmission electron microscope (TEM) images of the carbon nanotube structure (A) used in the examples and a single-walled carbon nanotube unit (B) used in a comparative example of the present invention.
FIG. 3 is an SEM image of a second positive electrode active material layer of a positive electrode according to Example 1 of the present invention.
FIG. 4 is TEM images of the positive electrode according to Example 1 of the present invention.
FIG. 5 is an SEM image of a second positive electrode active material layer of a positive electrode according to Comparative Example 3 of the present invention.
FIG. 6 is an SEM image of a second positive electrode active material layer of a positive electrode according to Comparative Example 2 of the present invention.

### MODE FOR CARRYING OUT THE INVENTION

In the present specification, the expression "%" denotes wt% unless explicitly stated otherwise.

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mini II by Bell Japan Inc.

The expression "average particle diameter (D₅₀)" in the present specification may be defined as a particle diameter at a cumulative volume of 50% in a particle size distribution curve. The average particle diameter (D₅₀), for example, may be measured by using a laser diffraction method. The laser diffraction method may generally measure a particle diameter ranging from a submicron level to a few mm and may obtain highly repeatable and high-resolution results.

In the present invention, the expression "single-walled carbon nanotube unit" denotes a unit in the form of a single-walled tube composed of carbon atoms, and the expression "multi-walled carbon nanotube unit" denotes a unit in the form of a tube with multiple walls composed of carbon atoms.

Hereinafter, the present invention will be described in detail.

### Positive Electrode

A positive electrode according to the present invention includes a positive electrode collector, a first positive electrode active material layer which is disposed on the positive electrode collector and includes a first positive electrode active material, and a second positive electrode active material layer disposed on the first positive electrode active material layer, wherein the second positive electrode active material layer includes a second positive electrode active material and carbon nanotube structures in which 2 to 5,000 single-walled carbon nanotube units are bonded side by side in each carbon nanotube structure, wherein the carbon nanotube structures are included in an amount of 0.01 wt% to 1.0 wt% in the second positive electrode active material layer, and wherein the carbon nanotube structures are interconnected in the second positive electrode active material layer to form a network structure.

The first positive electrode active material layer may be disposed on one surface or both surfaces of the positive electrode collector.

The positive electrode collector is not particularly limited as long as it has conductivity without causing adverse chemical changes in the battery, and, for example, copper, stainless steel, aluminum, nickel, titanium, alloys thereof, these materials that are surface-treated with one of carbon, nickel, titanium, silver, or the like, or fired carbon may be used.

The positive electrode collector may typically have a thickness of 3 um to 500 µm, and microscopic irregularities may be formed on the surface of the positive electrode collector to improve the adhesion of a positive electrode active material. Also, the positive electrode collector, for example, may be used in various shapes such as that of a film, a sheet, a foil, a net, a porous body, a foam body, a nonwoven fabric body, and the like.

The first positive electrode active material layer is disposed on the positive electrode collector, and specifically, may be in direct contact with the positive electrode collector.

In general, in a case in which carbon nanotubes are used as a conductive agent, a carbon nanotube dispersion having a low solid content may be used in order to uniformly arrange the carbon nanotubes in the positive electrode active material layer. However, when the carbon nanotube dispersion having a low solid content is used, there is a problem in that positive electrode adhesion and electrical conductivity are significantly reduced due to the occurrence of a phenomenon (migration phenomenon, migration) in which a binder and the conductive agent, which have relatively lower density than the positive electrode active material, easily migrate to an upper portion of the positive electrode active material layer (far from the current collector and close to a surface) during drying of a positive electrode slurry. In contrast, since the positive electrode of the present invention has a first positive electrode active material layer and a second positive electrode active material layer which are sequentially disposed as each of slurries, the above-described migration phenomenon of the binder and the conductive agent may be minimized. Accordingly, input/output characteristics and life characteristics of a battery may be improved.

The first positive electrode active material layer includes a first positive electrode active material.

The first positive electrode active material may be a positive electrode active material commonly used in the art, but types thereof are not particularly limited.

For example, as the first positive electrode active material, a lithium oxide including lithium and at least one metal such as cobalt, manganese, nickel, or aluminum may be used. Specifically, the lithium oxide may include lithium-manganese-based oxide (e.g., LiMnO₂, LiMn₂O), lithium-cobalt-based oxide (e.g., LiCoO₂), lithium-nickel-based oxide (e.g., LiNiO₂), lithium-nickel-manganese-based oxide (e.g., LiNi_{1-Y1}Mn_{Y1}O₂ (where 0<Y1<1), LiMn_{2-Z1}Ni_{Z1}O₄ (where 0<Z1<2)), lithium-nickel-cobalt-based oxide (e.g., LiNi_{1-Y2}Co_{Y2}O₂ (where 0<Y2<1)), lithium-manganese-cobalt-based oxide (e.g., LiCo_{1-Y3}Mn_{Y3}O₂ (where 0<Y3<1), LiMn_{2-Z2}Co_{Z2}O₄ (where 0<Z2<2)), lithium-nickel-cobalt-manganese-based oxide (e.g., Li(Ni_{P1}Co_{Q1}Mn_{R1})O₂ (where 0<P1<1, 0<Q1<1, 0<R1<1, and P1+Q1+R1=1) or Li(Ni_{P2}Co_{Q2}Mn_{R2})O₄ (where 0<P2<2, 0<Q2<2, 0<R2<2, and P2+Q2+R2=2)), or lithium-nickel-cobalt-manganese-transition metal (M) oxide (e.g., Li(Ni_{P3}Co_{Q3}Mn_{R3}M¹_{S})O₂ (where M¹ is selected from the group consisting of aluminum (Al), copper (Cu), iron (Fe), vanadium (V), chromium (Cr), titanium (Ti), zirconium (Zr), zinc (Zn), tantalum (Ta), niobium (Nb), magnesium (Mg), boron (B), tungsten (W), and molybdenum (Mo), and P3, Q3, R3, and S are atomic fractions of each independent elements, wherein 0<P3<1, 0<Q3<1, 0<R3<1, 0<S<1, and P3+Q3+R3+S=1)), and any one thereof or a compound of two or more thereof may be included.

The first positive electrode active material may be included in an amount of 70 wt% to 99.5 wt%, for example, 80 wt% to 99 wt% in the first positive electrode active material layer. When the amount of the first positive electrode active material satisfies the above range, excellent energy density, positive electrode adhesion, and electrical conductivity may be achieved.

The first positive electrode active material layer may further include a first conductive agent.

The first conductive agent may include at least one selected from the group consisting of a carbon nanotube structure, a multi-walled carbon nanotube unit, and carbon black. The carbon nanotube structure will be described in detail later.

The first conductive agent may be included in an amount of 0.01 wt% to 2.0 wt%, particularly 0.01 wt% to 1.5 wt%, and more particularly 0.05 wt% to 1.0 wt% in the positive electrode active material layer. In a case in which the amount of the first conductive agent satisfies the above range, the adhesion of the positive electrode and the electrical conductivity may be significantly improved by only using a small amount of the first conductive agent, and a battery having excellent input/output characteristics and life characteristics may be achieved.

The first positive electrode active material layer may have a thickness of 1 um to 100 um, particularly 5 um to 90 um, and more particularly 10 um to 80 um. When the thickness satisfies the above range, the above-described migration phenomenon of the binder and the conductive agent may be minimized. Accordingly, the adhesion of the positive electrode and the electrical conductivity may be significantly improved, and the input/output characteristics and life characteristics of the battery may be improved.

The second positive electrode active material layer is disposed on the first positive electrode active material layer. Specifically, the second positive electrode active material layer is spaced apart from the current collector while having the first positive electrode active material layer disposed therebetween.

The second positive electrode active material layer includes a second positive electrode active material.

The second positive electrode active material may be a positive electrode active material commonly used in the art, but types thereof are not particularly limited.

For example, as the second positive electrode active material, a lithium oxide including lithium and at least one metal such as cobalt, manganese, nickel, or aluminum may be used. Specifically, the lithium oxide may include lithium-manganese-based oxide (e.g., LiMnO₂, LiMn₂O), lithium-cobalt-based oxide (e.g., LiCoO₂), lithium-nickel-based oxide (e.g., LiNiO₂), lithium-nickel-manganese-based oxide (e.g., LiNi_{1-Y1}Mn_{Y1}O₂ (where 0<Y1<1), LiMn_{2-Z1}Ni_{Z1}O₄ (where 0<Z1<2)), lithium-nickel-cobalt-based oxide (e.g., LiNi_{1-Y2}Co_{Y2}O₂ (where 0<Y2<1)), lithium-manganese-cobalt-based oxide (e.g., LiCo_{1-Y3}Mn_{Y3}O₂ (where 0<Y3<1), LiMn_{2-Z2}Co_{Z2}O₄ (where 0<Z2<2)), lithium-nickel-cobalt-manganese-based oxide (e.g., Li(Ni_{P1}Co_{Q1}Mn_{R1})O₂ (where 0<P1<1, 0<Q1<1, 0<R1<1, and P1+Q1+R1=1) or Li(Ni_{P2}Co_{Q2}Mn_{R2})O₄ (where 0<P2<2, 0<Q2<2, 0<R2<2, and P2+Q2+R2=2)), or lithium-nickel-cobalt-manganese-transition metal (M) oxide (e.g., Li(Ni_{P3}Co_{Q3}Mn_{R3}M¹_{S})O₂ (where M¹ is selected from the group consisting of aluminum (Al), copper (Cu), iron (Fe), vanadium (V), chromium (Cr), titanium (Ti), zirconium (Zr), zinc (Zn), tantalum (Ta), niobium (Nb), magnesium (Mg), boron (B), tungsten (W), and molybdenum (Mo), and P3, Q3, R3, and S are atomic fractions of each independent elements, wherein 0<P3<1, 0<Q3<1, 0<R3<1, 0<S<1, and P3+Q3+R3+S=1)), and any one thereof or a compound of two or more thereof may be included.

The second positive electrode active material may be included in an amount of 70 wt% to 99.5 wt%, for example, 80 wt% to 99 wt% in the second positive electrode active material layer. When the amount of the second positive electrode active material satisfies the above range, excellent energy density, positive electrode adhesion, and electrical conductivity may be achieved.

The second positive electrode active material layer further includes carbon nanotube structures in which 2 to 5,000 single-walled carbon nanotube units are bonded to each other in each carbon nanotube structure. More specifically, in consideration of durability of the positive electrode and a conductive network, the carbon nanotube structures are most preferably carbon nanotube structures in which 2 to 4,500, preferably 50 to 4,000, and more preferably 1,000 to 4,000 single-walled carbon nanotube units are bonded to each other.

The single-walled carbon nanotube units are arranged side by side and bonded in the carbon nanotube structures (cylindrical structure having flexibility in which the units are bonded such that long axes of the units are parallel to each other) to form the carbon nanotube structures. The carbon nanotube structures are interconnected in the positive electrode to form a network structure.

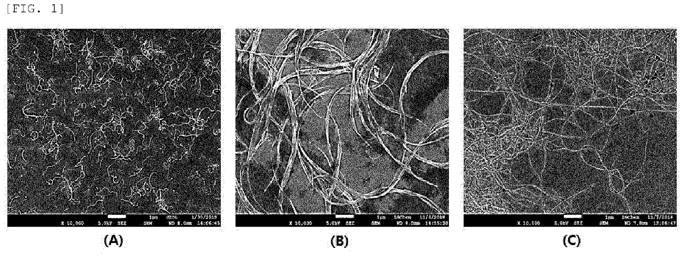

In a typical positive electrode including common carbon nanotubes, a positive electrode active material layer is prepared by preparing a conductive agent dispersion by dispersing bundle type or entangled type carbon nanotubes (form in which single-walled carbon nanotube units or multi-walled carbon nanotube units are attached or entangled with each other) in a dispersion medium and then using the conductive agent dispersion. In this case, since the carbon nanotubes are fully dispersed in the typical conductive agent dispersion, the carbon nanotubes are present as the conductive agent dispersion in which single-stranded carbon nanotube units are dispersed. With respect to the typical conductive agent dispersion, since the carbon nanotube units are easily cut by an excessive dispersion process, the carbon nanotube units have a length (e.g., 3 µm or less) shorter than an initial length or have a shape that may be easily cut. Accordingly, since the units do not smoothly perform a buffering role that suppresses damage (e.g., breakage) of the positive electrode active material in a rolling process during the preparation of the battery, the damage of the positive electrode active material easily occurs. Also, since the single-walled carbon nanotube units have a small diameter and are easily broken, it is difficult to secure a space between the positive electrode active materials, and thus, porosity of the positive electrode active material layer is inevitably low. Accordingly, a diffusion rate of lithium ions may be reduced. Furthermore, with respect to the multi-walled carbon nanotube units, structural defects are high due to a mechanism in which nodes grow (the units are not smooth and linear, but the nodes are present due to defects generated during the growth process). Thus, the multi-walled carbon nanotube units are more easily cut in the dispersion process (see A of FIG. 1), and the short-cut multi-walled carbon nanotube units may be easily aggregated by π-π stacking caused by carbon of the unit. Accordingly, it is more difficult for the multi-walled carbon nanotube units to be more uniformly dispersed in the positive electrode slurry.

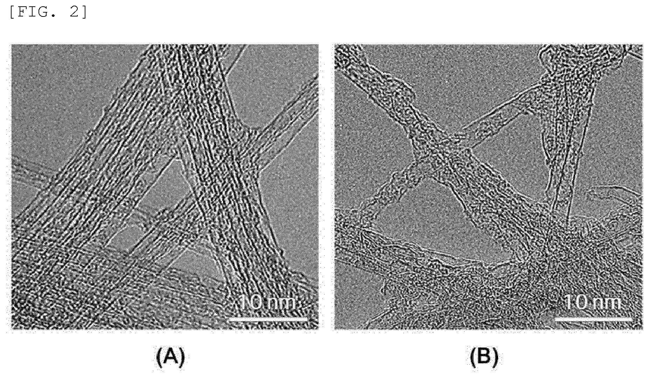

Alternatively, with respect to the carbon nanotube structures included in the second positive electrode active material layer of the present invention, since the carbon nanotube structures are in the form of a rope in which 2 to 5,000 single-walled carbon nanotube units maintaining relatively high crystallinity without structural defects are arranged side by side and bonded together (see B and C of FIG. 1 and A of FIG. 2), the single-walled carbon nanotube units may not be cut even with changes in the volume of the positive electrode active material and their length may be smoothly maintained, and thus, the conductivity of the positive electrode may be maintained even during continuous charge/discharge processes of the battery. Also, since the conductivity of the positive electrode is increased due to high conductivity of the single-walled carbon nanotube unit having high crystallinity, resistance of the positive electrode may be reduced and the input/output characteristics and life characteristics of the battery may be significantly improved. Furthermore, since the carbon nanotube structures are interconnected in the second positive electrode active material layer directly under pressure during rolling to have a network structure, damage (e.g., breakage phenomenon such as cracks) of the second positive electrode active material may be suppressed. Also, even if cracks are generated in the second positive electrode active material, since the carbon nanotube structures may connect the second positive electrode active materials while crossing the cracks, the conductive network may be maintained. Furthermore, since the carbon nanotube structures are not easily broken and may maintain their long shapes, the conductive network may be strengthened over the entire second positive electrode active material layer. Also, the positive electrode adhesion may be significantly improved by inhibiting exfoliation of the second positive electrode active material.

In the carbon nanotube structures, the single-walled carbon nanotube units may have an average diameter of 0.5 nm to 5 nm, for example, 1 nm to 5 nm. When the average diameter is satisfied, the conductivity in the positive electrode may be maximized even with a very small amount of the conductive agent. The average diameter corresponds to an average value of diameters of top 100 single-walled carbon nanotube units with a larger diameter and bottom 100 single-walled carbon nanotube units with a smaller diameter when the prepared positive electrode is observed by TEM.

In the carbon nanotube structures, the single-walled carbon nanotube units may have an average length of 1 um to 100 µm, for example, 5 um to 50 um. When the average length is satisfied, since a long conductive path for conductive connection between the positive electrode active materials may be formed and a unique network structure may be formed, the conductivity in the positive electrode may be maximized even with a very small amount of the conductive agent. The average length corresponds to an average value of lengths of top 100 single-walled carbon nanotube units with a larger length and bottom 100 single-walled carbon nanotube units with a smaller length when the prepared positive electrode is observed by TEM.

The single-walled carbon nanotube units may have a specific surface area of 500 m²/g to 1,000 m²/g, for example, 600 m²/g to 800 m²/g. When the specific surface area satisfies the above range, since the conductive path in the positive electrode may be smoothly secured by the wide specific surface area, the conductivity in the positive electrode may be maximized even with a very small amount of the conductive agent. The specific surface area of the single-walled carbon nanotube unit may specifically be calculated from a nitrogen gas adsorption amount at a liquid nitrogen temperature (77K) using BELSORP-mini II by Bell Japan Inc.

The carbon nanotube structures may have an average diameter of 2 nm to 200 nm, particularly 5 nm to 150 nm, and more particularly 50 nm to 120 nm. When the average diameter satisfies the above range, since it is effective in forming a conductive network structure and is advantageous in connecting the active materials, excellent electrical conductivity may be achieved. The average diameter corresponds to an average value of diameters of top 100 carbon nanotube structures with a larger diameter and bottom 100 carbon nanotube structures with a smaller diameter when the prepared positive electrode is observed by SEM.

The carbon nanotube structures may have an average length of 1 um to 500 um, particularly 5 um to 100 µm, and more particularly 10 um to 70 um. When the average length satisfies the above range, since it is effective in forming the conductive network structure and is advantageous in connecting the positive electrode active materials, excellent electrical conductivity may be achieved. The average length corresponds to an average value of lengths of top 100 carbon nanotube structures with a larger length and lengths of bottom 100 carbon nanotube structures with a smaller length when the prepared positive electrode is observed by SEM.

The carbon nanotube structures are included in an amount of 0.01 wt% to 1.0 wt% in the second positive electrode active material layer, may specifically be included in an amount of 0.01 wt% to 0.5 wt%, and may more specifically be included in an amount of 0.01 wt% to 0.2 wt%. When the amount of the carbon nanotube structures satisfies the above range, since the conductive path in the second positive electrode active material layer may be secured, the life characteristics of the battery may be improved while the positive electrode resistance is maintained at a low level. In a case in which the bundle type carbon nanotubes are fully dispersed (as a typical dispersion method in which the carbon nanotubes are dispersed so that single-stranded carbon nanotube units are separated from each other as much as possible) when the conductive agent dispersion is prepared, the carbon nanotube structure is not generated, or is generated in a very small amount (for example, 0.0005 wt%) even if it is unintentionally generated. That is, the above amount range may never be achieved in the usual way. Since the carbon nanotube structures are in the form in which 2 to 5,000 single-walled carbon nanotube units are arranged side by side and bonded together, the carbon nanotube structures may not be cut even with changes in the volume of the positive electrode active material and their length may be smoothly maintained. Thus, the conductivity network of the second positive electrode active material layer may be maintained and the conductivity of the second positive electrode active material layer may be smoothly secured due to the high conductivity of the carbon nanotube structure. Accordingly, the input/output characteristics and life characteristics of the battery may be excellent even if the amount of the carbon nanotube structures in the second positive electrode active material layer is low.

In some cases, the single-walled carbon nanotube units may be surface-treated through an oxidation treatment or nitridation treatment to improve affinity with a dispersant.

An exposed area of a surface of the second positive electrode active material without being covered by the carbon nanotube structures may be in a range of 50% to 99.99% of the entire surface of the second positive electrode active material, and may specifically be in a range of 50% to 99.9%. That is, it means that the carbon nanotube structures are not formed as a kind of layer on the second positive electrode active material, but only connect the second positive electrode active materials.

The second positive electrode active material layer may have a thickness of 1 um to 100 um, particularly 5 um to 90 um, and more particularly 10 um to 80 um. When the thickness satisfies the above range, the above-described migration phenomenon of the binder and the conductive agent may be minimized. Accordingly, the adhesion of the positive electrode and the electrical conductivity may be significantly improved, and the input/output characteristics and life characteristics of the battery may be improved.

The thickness of the second positive electrode active material layer may be greater than or equal to the thickness of the first positive electrode active material layer. A ratio of the thickness of the first positive electrode active material layer to the thickness of the second positive electrode active material layer may be in a range of 10:90 to 50:50, particularly 20:80 to 50:50, and more particularly 25:75 to 50:50. In a case in which the ratio does not satisfy the above range, an effect of suppressing the above-described migration phenomenon of the binder and the conductive agent is reduced, and an effect of improving diffusion resistance by improving porosity of the second positive active material layer is reduced. Since the effect of suppressing the above-described migration phenomenon of the binder and the conductive agent is reduced even when the thickness of the first positive electrode active material layer is outside the above range and excessively small, an effect of improving the positive electrode adhesion and improving interfacial resistance becomes insignificant.

An interface exists between the first positive electrode active material layer and the second positive electrode active material layer. This may be confirmed by a cross section of the prepared positive electrode. In contrast, if the positive electrode active material layer is formed in a single-layer structure rather than a multi-layer structure (only one coating is performed by using a single positive electrode slurry), the interface is not observed.

The first positive electrode active material layer and the second positive electrode active material layer each may further include a binder, and the binder of the first positive electrode active material layer and the binder of the second positive electrode active material layer may be the same or different from each other. The binder is for securing adhesion between the positive electrode active materials and adhesion of the positive electrode active material to the current collector, wherein common binders used in the art may be used, and types thereof are not particularly limited. The binder, for example, may include polyvinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, tetrafluoroethylene, polyethylene, polypropylene, an ethylene-propylene-diene monomer (EPDM), a sulfonated-EPDM, carboxymethyl cellulose (CMC), a styrenebutadiene rubber (SBR), a fluorine rubber, or various copolymers thereof, and any one thereof or a mixture of two or more thereof may be used.

The binder may be included in an amount of 10 wt% or less, for example, 0.1 wt% to 5 wt% in the first positive electrode active material layer (or the second positive electrode active material layer). In a case in which the amount of the binder satisfies the above range, excellent positive electrode adhesion may be achieved while minimizing an increase in the positive electrode resistance.

### Method of Preparing Positive Electrode

Next, a method of preparing the positive electrode of the present invention will be described.

The method of preparing the positive electrode of the present invention may include the steps of preparing a first positive electrode slurry and a second positive electrode slurry; forming a first positive electrode active material layer on a positive electrode collector using the first positive electrode slurry; and forming a second positive electrode active material layer on the first positive electrode active material layer using the second positive electrode slurry, wherein the first positive electrode slurry includes a first positive electrode active material, and the second positive electrode slurry includes a second positive electrode active material and carbon nanotube structures in which 2 to 5,000 single-walled carbon nanotube units are bonded side by side in each carbon nanotube structure. The first positive electrode active material, the second positive electrode active material, and the carbon nanotube structures are the same as those of the above-described embodiment.

### (1) Preparing of the First Positive Electrode Slurry and the Second Positive Electrode Slurry

A method of preparing a first positive electrode slurry may be the same as a conventional method of preparing a positive electrode slurry. For example, after preparing a mixture including a first positive electrode active material, a first conductive agent (same as the first conductive agent of the above-described embodiment), and a solvent (binder may be further included), the mixture is stirred to prepare a first positive electrode slurry.

However, in a case in which the first positive electrode slurry includes a carbon nanotube structure, a carbon nanotube structure dispersion to be described later may be prepared.

The solvent, for example, may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used, but the present invention is not limited thereto. The solvent may be the same or different from the dispersion medium used in the predispersion, and the solvent may preferably be N-methylpyrrolidone (NMP).

After preparing a mixture including a second positive electrode active material, a carbon nanotube structure dispersion, and a solvent, a second positive electrode slurry may be prepared by stirring the mixture.

The carbon nanotube structure dispersion may be prepared as follows.

The preparation of the carbon nanotube structure dispersion may include the steps of preparing a mixed solution including a dispersion medium, a dispersant, and bundle type single-walled carbon nanotubes (bonded body or aggregate of single-walled carbon nanotube units) (S1-1); and forming a carbon nanotube structure, in which 2 to 5,000 single-walled carbon nanotube units are bonded side by side, by dispersing the bundle type single-walled carbon nanotubes by applying a shear force to the mixed solution (S1-2).

In step S1-1, the mixed solution may be prepared by adding bundle type single-walled carbon nanotubes and a dispersant to a dispersion medium. The bundle type single-walled carbon nanotubes are present in the form of a bundle in which the above-described single-walled carbon nanotube units are bonded, wherein the bundle type carbon nanotube includes usually 2 or more, substantially 500 or more, for example, 5,000 or more single-walled carbon nanotube units.

The bundle type single-walled carbon nanotube may have a specific surface area of 500 m²/g to 1,000 m²/g, for example, 600 m²/g to 800 m²/g. When the specific surface area satisfies the above range, since the conductive path in the second positive electrode active material layer may be smoothly secured by the wide specific surface area, the conductivity in the second positive electrode active material layer may be maximized even with a very small amount of the conductive agent.

The bundle type single-walled carbon nanotubes may be included in an amount of 0.1 wt% to 1.0 wt%, for example, 0.2 wt% to 0.5 wt% in the mixed solution. When the amount of the bundle type single-walled carbon nanotubes satisfies the above range, since the bundle type single-walled carbon nanotubes are dispersed in an appropriate level, a carbon nanotube structure may be formed at an appropriate level and dispersion stability may be improved.

The dispersion medium, for example, may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used, but the present invention is not limited thereto. Specifically, the dispersion medium may be N-methylpyrrolidone (NMP).

The dispersant may include at least one selected from a hydrogenated nitrile butadiene rubber, polyvinylidene fluoride, and carboxy methyl cellulose, and may specifically be polyvinylidene fluoride or a hydrogenated nitrile butadiene rubber.

In the conductive agent dispersion, a weight ratio of the bundle type carbon nanotubes to the dispersant may be in a range of 1:0.1 to 1:7, for example, 1:1 to 1:6. In a case in which the weight ratio satisfies the above range, since the bundle type single-walled carbon nanotubes are dispersed in an appropriate level, a carbon nanotube structure may be formed at an appropriate level and the dispersion stability may be improved.

A solid content in the mixed solution may be in a range of 0.1 wt% to 20 wt%, for example, 1 wt% to 10 wt%. In a case in which the solid content satisfies the above range, since the bundle type single-walled carbon nanotubes are dispersed in an appropriate level, a carbon nanotube structure may be formed at an appropriate level and the dispersion stability may be improved. Also, the second positive electrode slurry (slurry for preparing the second positive electrode active material layer) may have viscosity and elasticity suitable for the formation of the second positive electrode active material layer, and it also contributes to increase the solid content of the second positive electrode slurry.

In step S1-2, a process of dispersing the bundle type carbon nanotubes in the mixed solution may be performed by using a mixing device such as a homogenizer, a bead mill, a ball mill, a basket mill, an attrition mill, a universal stirrer, a clear mixer, a spike mill, a TK mixer, or sonication equipment. Among them, a bead-mill method is preferred in that it may precisely control the diameter of the carbon nanotube structure, may achieve a uniform distribution of the carbon nanotube structure, and may have advantages in terms of cost.

The bead-mill method may be as follows. The mixed solution may be put in a vessel containing beads, and the vessel may be rotated to disperse the bundle type single-walled carbon nanotubes.

In this case, conditions under which the bead-mill method is performed are as follows.

The beads may have an average diameter of 0.5 mm to 1.5 mm, for example, 0.5 mm to 1.0 mm. In a case in which the average diameter satisfies the above range, the diameter of the carbon nanotube structure may be properly controlled without breaking the carbon nanotube structure during a dispersion process, and a dispersion solution with a uniform composition may be prepared.

A rotational speed of the vessel may be in a range of 500 RPM to 10,000 RPM, for example, 2,000 RPM to 6,000 RPM. In a case in which the rotational speed satisfies the above range, the diameter of the carbon nanotube structure may be properly controlled without breaking the carbon nanotube structure during the dispersion process, and a dispersion solution with a uniform composition may be prepared.

The time during which the bead mill is performed may be in a range of 0.5 hours to 2 hours, particularly 0.5 hours to 1.5 hours, and more particularly 0.8 hours to 1 hour. In a case in which the time satisfies the above range, the diameter of the carbon nanotube structure may be properly controlled without breaking the carbon nanotube structure during the dispersion process, and a dispersion solution with a uniform composition may be prepared. The performance time of the bead mill means total time during which the bead mill is used, and, thus, for example, if the bead mill is performed several times, the performance time means total time required for performing the bead mill several times.

The above bead mill conditions are for dispersing the bundle type single-walled carbon nanotubes at an appropriate level, and specifically exclude the case where the bundle type single-walled carbon nanotubes are completely dispersed into single-stranded single-walled carbon nanotubes. That is, the above bead mill conditions are for forming the carbon nanotube structure in which 2 to 5,000 single-walled carbon nanotube units are bonded together side by side in the conductive agent dispersion prepared by appropriately dispersing the bundle type single-walled carbon nanotubes. This may be achieved only when a composition of the mixed solution and dispersion process (e.g., bead mill process) conditions are strictly controlled.

A carbon nanotube structure dispersion may be formed through the above process.

A binder may be further included in the positive electrode slurries (the first positive electrode slurry and the second positive electrode slurry), if necessary. In this case, the binder of the above-described embodiment may be used as the binder.

### (2) Forming of the First Positive Electrode Active Material Layer on the Positive Electrode Collector Using the First Positive Electrode Slurry and Forming of the Second Positive Electrode Active Material Layer on the First Positive Electrode Active Material Layer Using the Second Positive Electrode Slurry

Next, a first positive electrode active material layer is formed by using the first positive electrode slurry prepared as described above. Specifically, the first positive electrode active material layer may be prepared by a method of coating the first positive electrode slurry on a positive electrode collector and drying the coated positive electrode collector, or may be prepared by a method of casting the first positive electrode slurry on a separate support and then laminating a film separated from the support on the positive electrode collector. If necessary, the first positive electrode active material layer is formed by the above-described method, and a rolling process may then be further performed. In this case, the drying and the rolling may be performed under appropriate conditions in consideration of physical properties of the positive electrode to be finally prepared, and are not particularly limited.

Thereafter, a second positive electrode active material layer is formed by using the second positive electrode slurry prepared as described above. Specifically, the second positive electrode active material layer may be prepared by a method of coating the second positive electrode slurry on the first positive electrode active material layer and drying the second positive electrode slurry, or may be prepared by a method of casting the second positive electrode slurry on a separate support and then laminating a film separated from the support on the first positive electrode active material layer. If necessary, the second positive electrode active material layer is formed by the above-described method, and a rolling process may then be further performed. In this case, the drying and the rolling may be performed under appropriate conditions in consideration of physical properties of the positive electrode to be finally prepared, and are not particularly limited.

### Secondary Battery

A secondary battery according to another embodiment of the present invention may include a negative electrode, a positive electrode, a separator disposed between the positive electrode and the negative electrode, and an electrolyte, and the positive electrode may be the positive electrode of the above-described embodiment.

The negative electrode may include a negative electrode collector and a negative electrode active material layer disposed on one surface or both surfaces of the negative electrode collector.

The negative electrode collector is not particularly limited so long as it has conductivity without causing adverse chemical changes in the battery. For example, copper, stainless steel, aluminum, nickel, titanium, fired carbon, aluminum or stainless steel that is surface-treated with one of carbon, nickel, titanium, silver, or the like may be used as the negative electrode collector. Specifically, a transition metal that absorbs carbon well, such as copper and nickel, may be used as the current collector.

The negative electrode active material layer may include a negative electrode active material, a negative electrode conductive agent, and a negative electrode binder.

The negative electrode active material may be a negative electrode active material commonly used in the art, but it is not particularly limited. For example, the negative electrode active material may include graphite-based active material particles or silicon-based active material particles. At least one selected from the group consisting of artificial graphite, natural graphite, graphitized carbon fibers, and graphitized mesocarbon microbeads may be used as the graphite-based active material particles, and rate capability may be improved particularly when the artificial graphite is used. At least one selected from the group consisting of silicon (Si), SiOₓ (0<x<2), a Si-C composite, and a Si-Y alloy (where Y is an element selected from the group consisting of alkali metal, alkaline earth metal, transition metal, a Group 13 element, a Group 14 element, a rare earth element, and a combination thereof) may be used as the silicon-based active material particles, and high capacity of the battery may be obtained particularly when Si or SiOₓ (0<x<2) is used.

The negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylate, an ethylene-propylene-diene monomer (EPDM), a sulfonated EPDM, a styrenebutadiene rubber (SBR), a fluorine rubber, poly acrylic acid, and a material having hydrogen thereof substituted with lithium (Li), sodium (Na), or calcium (Ca), or may include various copolymers thereof.

The negative electrode conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

As the non-aqueous organic solvent, for example, an aprotic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Particularly, among the carbonate-based organic solvents, since ethylene carbonate and propylene carbonate, as cyclic carbonate, well dissociate a lithium salt due to high permittivity as a highly viscous organic solvent, the cyclic carbonate may be preferably used. Since an electrolyte having high electrical conductivity may be prepared when the above cyclic carbonate is mixed with low viscosity, low permittivity linear carbonate, such as dimethyl carbonate and diethyl carbonate, in an appropriate ratio and used, the cyclic carbonate may be more preferably used.

A lithium salt may be used as the metal salt, and the lithium salt is a material that is readily soluble in the non-aqueous organic solvent, wherein, for example, at least one selected from the group consisting of F-, Cl⁻, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components.

According to another embodiment of the present invention, a battery module including the secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, the present invention will be described in detail, according to specific examples and comparative examples.

### Preparation Example 1: Preparation of Carbon Black Dispersion

Carbon black (in the form of a secondary particle composed of primary particles having an average diameter of 25 nm) with a specific surface area of 240 m²/g and a hydrogenated nitrile butadiene rubber (weight-average molecular weight: 260,000 g/mol) were mixed in N-methylpyrrolidone (NMP), as a solvent, to prepare a mixture such that a solid content was 16.5 wt%.

The carbon black was dispersed in the solvent by stirring the mixture by a bead-mill method and thus, a carbon black dispersion was prepared. In this case, beads had a diameter of 1 mm, a rotational speed of a stirring vessel containing the beads was 3,000 RPM, and the stirring was performed for 60 minutes.

In the carbon black dispersion, an amount of the carbon black was 15 wt%, and an amount of the hydrogenated nitrile butadiene rubber was 1.5 wt%.

### Preparation Example 2: Preparation of Carbon Nanotube Structure Dispersion

Bundle type single-walled carbon nanotubes (specific surface area of 650 m²/g) composed of single-walled carbon nanotube units having an average diameter of 1.5 nm and an average length of 5 um or more and polyvinylidene fluoride (PVdF, KF9700, weight-average molecular weight: 880,000 g/mol) were mixed in N-methylpyrrolidone (NMP), as a solvent, to prepare a mixture such that a solid content was 2.4 wt%.

The bundle type single-walled carbon nanotubes were dispersed in the solvent by stirring the mixture by a bead-mill method and thus, a carbon nanotube structure dispersion was prepared. In this case, beads had a diameter of 1 mm, a rotational speed of a stirring vessel containing the beads was 3,000 RPM, and the stirring was performed for 60 minutes. The carbon nanotube structure dispersion included carbon nanotube structures in the form in which 2 to 5,000 single-walled carbon nanotube units were bonded side by side (see A of FIG. 2).

In the carbon nanotube structure dispersion, an amount of the carbon nanotube structures was 0.4 wt%, and an amount of the polyvinylidene fluoride was 2.0 wt%.

### Preparation Example 3: Preparation of Carbon Nanotube Structure Dispersion

A carbon nanotube structure dispersion was prepared in the same manner as in Preparation Example 2 except that the polyvinylidene fluoride in Preparation Example 2 was changed to a hydrogenated nitrile butadiene rubber (weight-average molecular weight: 260,000 g/mol).

### Preparation Example 4: Preparation of Single-walled Carbon Nanotube Unit Dispersion

Bundle type single-walled carbon nanotubes (specific surface area of 650 m²/g) composed of single-walled carbon nanotube units having an average diameter of 1.5 nm and an average length of 5 um or more and a hydrogenated nitrile butadiene rubber (weight-average molecular weight: 260,000 g/mol) were mixed in N-methylpyrrolidone (NMP), as a solvent, to prepare a mixture such that a solid content was 4.4 wt% (0.4 wt% of the bundle type single-walled carbon nanotubes, 4.0 wt% of the hydrogenated nitrile butadiene rubber).

The bundle type single-walled carbon nanotubes were dispersed in the solvent by stirring the mixture by a bead-mill method and thus, a conductive agent dispersion was prepared. In this case, beads had a diameter of 1 mm, a rotational speed of a stirring vessel containing the beads was 3,000 RPM, and stirring for 60 minutes under the above conditions was set as one cycle and total 4 cycles (natural cooling was performed for 60 minutes between each cycle) were performed. Accordingly, a single-walled carbon nanotube unit dispersion was prepared (see B of FIG. 2). In the dispersion, since the bundle-type single-walled carbon nanotubes were completely dispersed, the single-walled carbon nanotube unit only existed as a single-strand unit, but the above-described carbon nanotube structure was not detected. Also, in the single-walled carbon nanotube unit dispersion, an amount of the carbon nanotube structure was 0.4 wt%, and an amount of the hydrogenated nitrile butadiene rubber was 4.0 wt%.

### Preparation Example 5: Preparation of Multi-walled Carbon Nanotube Unit Dispersion

Bundle type multi-walled carbon nanotubes, a hydrogenated nitrile butadiene rubber (H-NBR) as a dispersant, and N-methylpyrrolidone (NMP), as a dispersion medium, were mixed at a weight ratio of 4:0.8:95.2 to form a mixture. The mixture was added to a spike mill, in which 80% was filled with beads having a diameter of 0.65 mm, dispersed, and discharged at a discharge rate of 2 kg/min. The bundle type multi-walled carbon nanotubes were completely dispersed by performing this process twice to prepare a multi-walled carbon nanotube unit dispersion (see A of FIG. 1).

### Examples and Comparative Examples

### Example 1: Preparation of Positive Electrode

### (1) Formation of First Positive Electrode Active Material Layer

The carbon black dispersion of Preparation Example 1, LiNi_{0.6}Co_{0.2}Mn_{0.2}O₂ (NCM622), and a binder (PVDF-HFP, KF9700) were mixed with N-methylpyrrolidone (NMP) to prepare a first positive electrode slurry. The first positive electrode slurry was coated on a 20 um thick aluminum (Al) thin film current collector, dried at 130°C, and then rolled to form a first positive electrode active material layer.

96.35 wt% of the LiNi_{0.6}Co_{0.2}Mn_{0.2}O₂(NCM622), 2.0 wt% of the binder, 0.15 wt% of the hydrogenated nitrile butadiene rubber, and 1.5 wt% of the carbon black were included in the first positive electrode active material layer.

### (2) Formation of Second Positive Electrode Active Material Layer

The carbon nanotube structure dispersion of Preparation Example 2, LiNi_{0.6}Co_{0.2}Mn_{0.2}O₂ (NCM622), and a binder (PVDF-HFP, KF9700) were mixed with N-methylpyrrolidone (NMP) to prepare a second positive electrode slurry. The second positive electrode slurry was coated on the first positive electrode active material layer, dried at 130°C, and then rolled to form a second positive electrode active material layer.

98.39 wt% of the LiNi_{0.6}Co_{0.2}Mn_{0.2}O₂(NCM622), 1.51 wt% of the polyvinylidene fluoride (PVDF), and 0.1 wt% of the carbon nanotube structure were included in the second positive electrode active material layer.

### Example 2: Preparation of Positive Electrode

A positive electrode was prepared in the same manner as in Example 1 except that the carbon nanotube structure dispersion of Preparation Example 3 was used instead of the carbon nanotube structure dispersion of Preparation Example 2 when the second positive electrode active material layer was formed in Example 1.

### Example 3: Preparation of Positive Electrode

A positive electrode was prepared in the same manner as in Example 1 except that the multi-walled carbon nanotube unit dispersion of Preparation Example 5 was used instead of the carbon black dispersion of Preparation Example 1 during the formation of the first positive electrode slurry in Example 1. 97.16 wt% of the LiNi_{0.6}Co_{0.2}Mn_{0.2}O₂ (NCM622), 2.0 wt% of the binder, 0.14 wt% of the hydrogenated nitrile butadiene rubber, and 0.7 wt% of the multi-walled carbon nanotube unit were included in the first positive electrode active material layer.

### Example 4: Preparation of Positive Electrode

A positive electrode was prepared in the same manner as in Example 1 except that the carbon nanotube dispersion of Preparation Example 2 and the multi-walled carbon nanotube unit dispersion of Preparation Example 5 were used instead of the carbon black dispersion of Preparation Example 1 during the formation of the first positive electrode slurry in Example 1. A weight ratio of the carbon nanotube structure to the multi-walled carbon nanotubes in the prepared first positive electrode active material layer was 0.05:0.65. 97.05 wt% of the LiNi_{0.6}Co_{0.2}Mn_{0.2}O₂(NCM622), 2.13 wt% of the binder, 0.12 wt% of the hydrogenated nitrile butadiene rubber, 0.05 wt% of the carbon nanotube structure, and 0.65 wt% of the multi-walled carbon nanotube unit were included in the first positive electrode active material layer.

### Example 5: Preparation of Positive Electrode

A positive electrode was prepared in the same manner as in Example 1 except that the carbon nanotube dispersion of Preparation Example 2 was used instead of the carbon black dispersion of Preparation Example 1 during the formation of the first positive electrode slurry in Example 1.

97.75 wt% of the LiNi_{0.6}Co_{0.2}Mn_{0.2}O₂(NCM622), 2.15 wt% of the polyvinylidene fluoride, and 0.1 wt% of the carbon nanotube structure were included in the first positive electrode active material layer.

98.45 wt% of the LiNi_{0.6}Co_{0.2}Mn_{0.2}O₂(NCM622), 1.45 wt% of the polyvinylidene fluoride (PVDF), and 0.1 wt% of the carbon nanotube structure were included in the second positive electrode active material layer.

### Comparative Example 1: Preparation of Positive Electrode

The carbon nanotube structure dispersion of Preparation Example 2, LiNi_{0.6}Co_{0.2}Mn_{0.2}O₂(NCM622), and a binder (PVDF-HFP, KF9700) were mixed with N-methylpyrrolidone (NMP) to prepare a positive electrode slurry. The positive electrode slurry was coated on a 20 um thick Al thin film current collector, dried at 130°C, and then rolled to prepare a positive electrode including a positive electrode active material layer.

98.1 wt% of the LiNi_{0.6}Co_{0.2}Mn_{0.2}O₂(NCM622), 1.8 wt% of the polyvinylidene fluoride, and 0.1 wt% of the carbon nanotube structure were included in the positive electrode active material layer.

### Comparative Example 2: Preparation of Positive Electrode

A positive electrode was prepared in the same manner as in Example 1 except that the single-walled carbon nanotube unit dispersion of Preparation Example 4 was used instead of the carbon nanotube structure dispersion of Preparation Example 2 during the formation of the second positive electrode active material layer of Example 1.

96.4 wt% of the LiNi_{0.6}Co_{0.2}Mn_{0.2}O₂ (NCM622), 1.95 wt% of the binder, 0.15 wt% of the hydrogenated nitrile butadiene rubber, and 1.5 wt% of the carbon black were included in the first positive electrode active material layer.

98.5 wt% of the LiNi_{0.6}Co_{0.2}Mn_{0.2}O₂(NCM622), 0.4 wt% of the binder, 1.0 wt% of the hydrogenated nitrile butadiene rubber, and 0.1 wt% of the single-walled carbon nanotube units were included in the second positive electrode active material layer.

### Comparative Example 3: Preparation of Positive Electrode

A positive electrode was prepared in the same manner as in Example 1 except that the multi-walled carbon nanotube unit dispersion of Preparation Example 5 was used instead of the carbon nanotube structure dispersion of Preparation Example 2 during the formation of the second positive electrode active material layer of Example 1.

96.35 wt% of the LiNi_{0.6}Co_{0.2}Mn_{0.2}O₂(NCM622), 2.0 wt% of the binder, 0.15 wt% of the hydrogenated nitrile butadiene rubber, and 1.5 wt% of the carbon black were included in the first positive electrode active material layer.

97.84 wt% of the LiNi_{0.6}Co_{0.2}Mn_{0.2}O₂(NCM622), 1.32 wt% of the polyvinylidene fluoride, 0.14 wt% of the hydrogenated nitrile butadiene rubber, and 0.7 wt% of the multi-walled carbon nanotube units were included in the second positive electrode active material layer.

**[Table 1]**

| | First positive electrode active material layer | | | Second positive electrode active material layer | | |
|---|---|---|---|---|---|---|
| | Carbon black content (wt%) | Multi-walled carbon nanotube unit content (wt%) | Carbon nanotube structure content (wt%) | Carbon nanotube structure content (wt%) | Single-walled carbon nanotube unit (completely dispersed form) content (wt%) | Multi-walled carbon nanotube unit content (wt%) |
| Example 1 | 1.5 | - | - | 0.1 | - | - |
| Example 2 | 1.5 | - | - | 0.1 | - | - |
| Example 3 | - | 0.7 | - | 0.1 | - | - |
| Example 4 | - | 0.65 | 0.05 | 0.1 | - | - |
| Example 5 | - | - | 0.1 | 0.1 | - | - |
| Comparative Example 1 | The positive electrode active material layer was prepared as a single layer, and the amount of the carbon nanotube structure was 0.1 wt% in the entire positive electrode active material layer | | | | | |
| Comparative Example 2 | 1.5 | - | - | - | 0.1 | - |
| Comparative Example 3 | 1.5 | - | - | - | - | 0.7 |

In Examples 1 to 5 and Comparative Example 1, an average diameter of the carbon nanotube structures was 100 nm, and an average length thereof was 15.6 um. In Example 2, an average diameter of the carbon nanotube structures was 10 nm, and an average length thereof was 8.2 µm. In Comparative Example 2, an average diameter of the single-walled carbon nanotube units was 1.6 nm, and an average length thereof was 1.8 µm.

In the positive electrodes of Examples 3 and 4 and Comparative Example 3, an average diameter of the multi-walled carbon nanotube units was 10.8 nm, and an average length thereof was 1.3 µm.

The average diameter and average length correspond to an average value of diameters (or lengths) of top 100 carbon nanotube structures (or multi-walled carbon nanotube units, or single-walled carbon nanotube units) with a larger diameter (or length) and bottom 100 single-walled carbon nanotube structures (or multi-walled carbon nanotube units, or single-walled carbon nanotube units) with a smaller diameter (or length) when the prepared positive electrode is observed by a TEM.

### Experimental Example 1: Observation of Positive Electrode

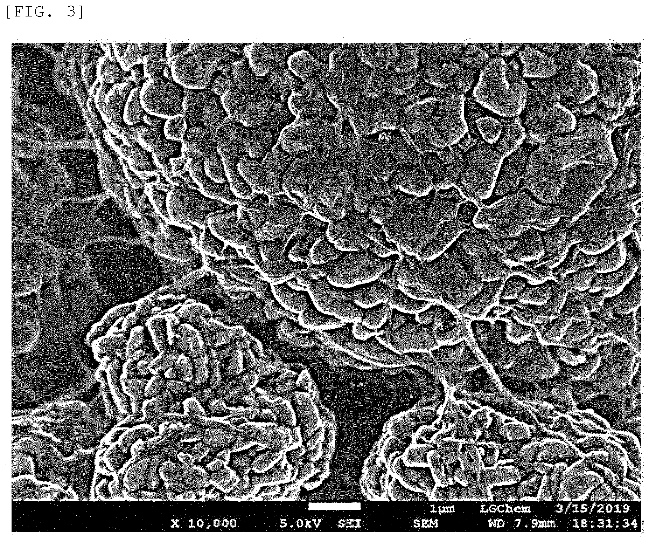

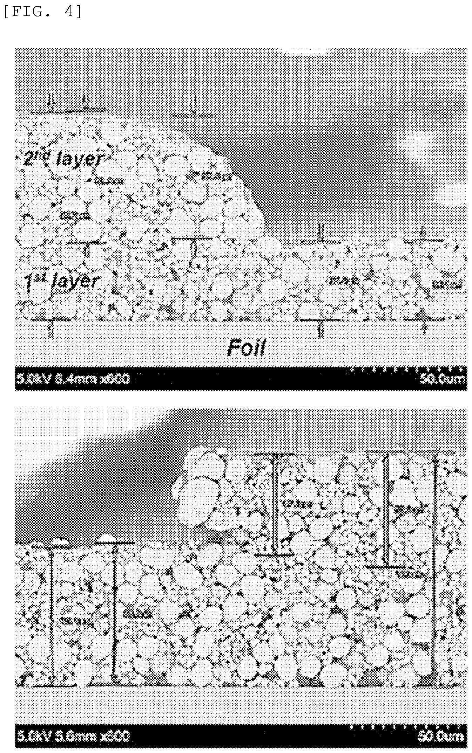

When the second positive electrode active material layer of Example 1 was observed by an SEM, it may be confirmed that the carbon nanotube structures in the form of a rope (form in which 2 to 5,000 single-walled carbon nanotube units were arranged side by side and bonded to each other) form a network structure together while having a long and thick shape to connect NCM622 particles to each other (see FIG. 3). Also, with respect to the positive electrode of Example 1, it may be understood that an interface separating the first positive electrode active material layer and the second positive electrode active material layer was clearly present (see FIG. 4).

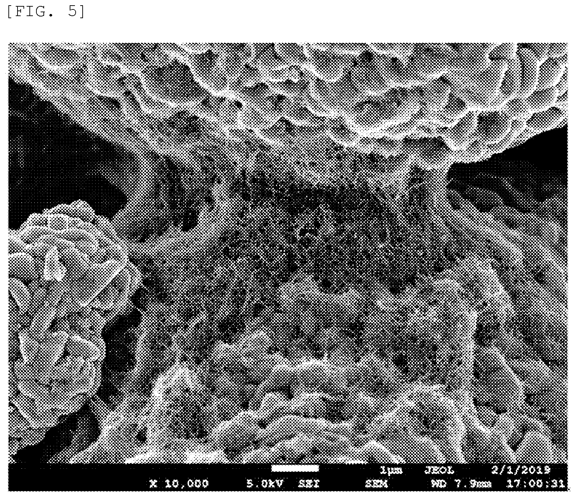

In contrast, when the second positive electrode active material layer of Comparative Example 3 was observed by an SEM, the multi-walled carbon nanotube units with a very short length were disposed on surfaces of the NCM622 particles, but a long and thick structure, such as the above-described carbon nanotube structure, was not identified (see FIG. 5).

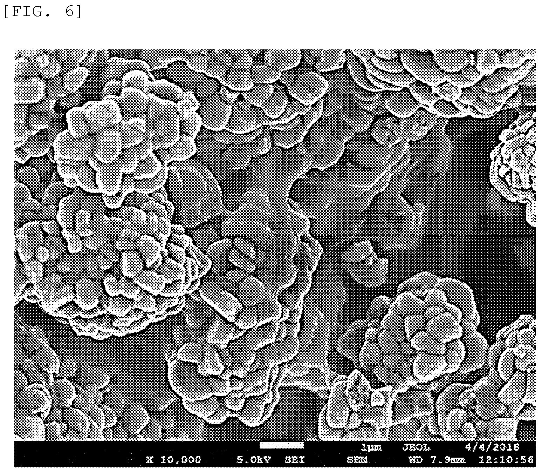

Also, when the second positive electrode active material layer of Comparative Example 2 was observed by an SEM, the single-walled carbon nanotube units with a short length were disposed in the form of a layer on surfaces of NCM622 particles, but a long and thick structure, such as the above-described carbon nanotube structure, was not identified (see FIG. 6).

### Experimental Example 2: Positive Electrode Adhesion Evaluation

Positive electrode adhesion was measured under dry conditions. Specifically, after a double-sided tape was attached to a slide glass and each positive electrode punched to a size of 20 mm×180 mm was placed thereon, a 2 kg roller was reciprocated 10 times to attach the electrode to the tape, and the electrode was then pulled at a rate of 200 mm/min using a universal testing machine (UTM, TA instruments) to measure a force detached from the slide glass. In this case, a measurement angle between the slide glass and the positive electrode was 90°. Measurement results are presented in Table 2 below.

### Experimental Example 3: Evaluation of Adhesion Between the First and Second Positive Electrode Active Material Layers

Shear strengths (N/mm²) were measured for Examples 1 to 5 and Comparative Examples 2 and 3 by the following method.

The shear strength was measured with a surface and interfacial characterization analysis system (SAICAS, SAICAS EN-EX (Daipla Wintes, Japan)), and the shear strength was measured from a force applied to a blade while performing oblique cutting of the positive electrode in a depth direction with a diamond micro-blade. Measurement data were shear strengths at a position of 1/2 of total positive electrode thickness (near the interface between the first and second positive electrode active material layers and a depth of about 50 um), and the results thereof are presented in Table 2 below.

### Experimental Example 4: Conductivity Evaluation

Resistance of each positive electrode was measured by using a Multi-Probe electrode resistance measurement system (Hioki E. E. Corporation, RM-2610 model), and the positive electrode resistance was separated into volume resistance (Ω·cm) for the positive electrode active material layer and interface resistance (Ω·cm²) between the active material layer and the current collector and measured by using the corresponding system.

### Experimental Example 5: Evaluation of Capacity Retention and Discharge Capacity According to C-Rate

Batteries were respectively prepared as follows by using the positive electrodes of Examples 1 to 5 and Comparative Examples 1 to 3.

Artificial graphite as a negative electrode active material, carbon black as a negative electrode conductive agent, a styrene-butadiene rubber (SBR) as a negative electrode binder, and carboxymethyl cellulose (CMC) were mixed in distilled water at a weight ratio of 96.1:0.5:2.3:1.1 to prepare a negative electrode slurry. A 20 um thick negative electrode collector (Cu) was coated with the prepared slurry so that a loading amount was 10 mg/cm² and dried. Thereafter, the negative electrode collector on which the negative electrode slurry was disposed was rolled by a roll rolling method such that a total thickness of the negative electrode slurry and the negative electrode collector was 80 um. Thereafter, the negative electrode slurry and the negative electrode collector were dried at 110°C for 6 hours to prepare a negative electrode.

Thereafter, after a mono-cell was prepared by combining the above-prepared negative electrode and the above-described positive electrode with a 15 um thick polyethylene-based separator disposed therebetween, an electrolyte solution (ethylene carbonate (EC)/ethylmethyl carbonate (EMC) = 1/2 (volume ratio)), lithium hexafluorophosphate (1 M LiPF₆)) was injected into the mono-cell to prepare a lithium secondary battery.

### 1) Evaluation of Discharge Capacity According to C-Rate

A charge C-rate was fixed at 0.2 C, and 2.0 C discharge capacity (%) relative to 0.2 C discharge capacity was measured for each lithium secondary battery while increasing a discharge C-rate from 0.2 C to 2.0 C, and the result thereof are presented in Table 2.

### 2) Capacity Retention (Life Characteristics) Evaluation

Charge and discharge of each of the lithium secondary batteries were performed under the following conditions.

Charge/discharge of each lithium secondary battery at 0.33 C/0.33 C in a voltage range of 4.25 V to 2.8 V at 45°C were set as one cycle, and total 100 cycles were performed. Thereafter, discharge capacity (capacity retention) after 100 cycles was evaluated based on discharge capacity after one cycle at 100% and presented in Table 2.

**[Table 2]**

| | Positive electrode adhesion (gf/20mm) | Shear strength according to Experimental Example 3 (N/mm²) | Volume resistance (Ω ·cm) | Interface resistance between positive electrode active material layer and current collector (Ω ·cm²) | 2.0C discharge capacity (%) | Capacity retention (%) |
|---|---|---|---|---|---|---|
| Example 1 | 38.1 | 31.1 | 0.06 | 0.08 | 91.6 | 92.9 |
| Example 2 | 37.2 | 30.2 | 0.07 | 0.08 | 91.1 | 92.3 |
| Example 3 | 39.5 | 31.5 | 0.04 | 0.06 | 92.3 | 93.5 |
| Example 4 | 41.7 | 36.7 | 0.03 | 0.04 | 93.5 | 94.7 |
| Example 5 | 42.6 | 38.9 | 0.05 | 0.07 | 91.2 | 92.5 |
| Comparative Example 1 | 40.8 | Not evaluated | 0.05 | 0.09 | 90.8 | 92.1 |
| Comparative Example 2 | 35.9 | 26.1 | 0.15 | 0.10 | 86.7 | 89.4 |
| Comparative Example 3 | 36.4 | 28.3 | 0.13 | 0.10 | 90.1 | 91.2 |

## Claims

1. A positive electrode comprising a positive electrode collector, a first positive electrode active material layer which is disposed on the positive electrode collector and includes a first positive electrode active material, and a second positive electrode active material layer disposed on the first positive electrode active material layer,
wherein the second positive electrode active material layer comprises
a second positive electrode active material, and
carbon nanotube structures in which 2 to 5,000 single-walled carbon nanotube units are bonded side by side in each carbon nanotube structure,
wherein the carbon nanotube structures are included in an amount of 0.01 wt% to 1.0 wt% in the second positive electrode active material layer, and
wherein the carbon nanotube structures are interconnected in the second positive electrode active material layer to form a network structure.

2. The positive electrode of claim 1, wherein the carbon nanotube structures have an average length of 1 um to 500 um, wherein the average length corresponds to an average value of lengths of top 100 carbon nanotube structures with a larger length and bottom 100 carbon nanotube structures with a smaller length when the positive electrode is observed by SEM.

3. The positive electrode of claim 1, wherein the carbon nanotube structures have an average length of 10 um to 70 um, wherein the average length corresponds to an average value of lengths of top 100 carbon nanotube structures with a larger length and bottom 100 carbon nanotube structures with a smaller length when the positive electrode is observed by SEM.

4. The positive electrode of claim 1, wherein the carbon nanotube structures have an average diameter of 2 nm to 200 nm, wherein the average diameter corresponds to an average value of diameters of top 100 carbon nanotube structures with a larger diameter and bottom 100 carbon nanotube structures with a smaller diameter when the positive electrode is observed by SEM.

5. The positive electrode of claim 1, wherein the carbon nanotube structures have an average diameter of 50 nm to 120 nm, wherein the average diameter corresponds to an average value of diameters of top 100 carbon nanotube structures with a larger diameter and bottom 100 carbon nanotube structures with a smaller diameter when the positive electrode is observed by SEM.

6. The positive electrode of claim 1, wherein, in the carbon nanotube structures, the single-walled carbon nanotube units have an average diameter of 0.5 nm to 5 nm, wherein the average diameter corresponds to an average value of diameters of top 100 single-walled carbon nanotube units with a larger diameter and bottom 100 single-walled carbon nanotube units with a smaller diameter when the positive electrode is observed by TEM.

7. The positive electrode of claim 1, wherein, in the carbon nanotube structures, 50 to 4,000 single-walled carbon nanotube units are bonded to each other.

8. The positive electrode of claim 1, wherein the first positive electrode active material layer comprises the first positive electrode active material and a first conductive agent, and the first conductive agent comprises at least one of the carbon nanotube structures, multi-walled carbon nanotube units, and carbon black.

9. The positive electrode of claim 1, wherein the first positive electrode active material layer has a thickness of 1 um to 100 µm.

10. The positive electrode of claim 1, wherein the second positive electrode active material layer has a thickness of 1 um to 100 µm.

11. A secondary battery comprising the positive electrode of any one of claims 1 to 10.

## Patentansprüche

1. Positive Elektrode, umfassend einen Kollektor für eine positive Elektrode, eine erste Aktivmaterialschicht für eine positive Elektrode, die auf den Kollektor für eine positive Elektrode angeordnet ist und ein erstes Aktivmaterial für eine positive Elektrode enthält, und eine zweite Aktivmaterialschicht für eine positive Elektrode, die auf der ersten Aktivmaterialschicht für eine positive Elektrode angeordnet ist,
wobei die zweite Aktivmaterialschicht für eine positive Elektrode
ein zweites Aktivmaterial für eine positive Elektrode und
Kohlenstoffnanoröhrchenstrukturen umfasst, in denen 2 bis 5.000 einwandige Kohlenstoffnanoröhrcheneinheiten in jeder Kohlenstoffnanoröhrchenstruktur Seite an Seite verbunden sind,
wobei die Kohlenstoffnanoröhrchenstrukturen in einer Menge von 0,01 Gew.-% bis 1,0 Gew.-% in der zweiten Aktivmaterialschicht für eine positive Elektrode enthalten sind und
wobei die Kohlenstoffnanoröhrchenstrukturen in der zweiten Aktivmaterialschicht für eine positive Elektrode miteinander verbunden sind, um eine Netzwerkstruktur zu bilden.

2. Positive Elektrode nach Anspruch 1, wobei die Kohlenstoffnanoröhrchenstrukturen eine durchschnittliche Länge von 1 µm bis 500 µm aufweisen, wobei die durchschnittliche Länge einem Durchschnittswert der Längen der 100 längsten Kohlenstoffnanoröhrchenstrukturen mit einer größeren Länge und der 100 kleinsten Kohlenstoffnanoröhrchenstrukturen mit einer kleineren Länge bei Betrachtung der positiven Elektrode durch REM entspricht.

3. Positive Elektrode nach Anspruch 1, wobei die Kohlenstoffnanoröhrchenstrukturen eine durchschnittliche Länge von 10 µm bis 70 µm aufweisen, wobei die durchschnittliche Länge einem Durchschnittswert der Längen der 100 längsten Kohlenstoffnanoröhrchenstrukturen mit einer größeren Länge und der 100 kleinsten Kohlenstoffnanoröhrchenstrukturen mit einer kleineren Länge bei Betrachtung der positiven Elektrode durch REM entspricht.

4. Positive Elektrode nach Anspruch 1, wobei die Kohlenstoffnanoröhrchenstrukturen einem durchschnittlichen Durchmesser von 2 nm bis 200 nm aufweisen, wobei der durchschnittliche Durchmesser einem Durchschnittswert der Durchmesser der 100 größten Kohlenstoffnanoröhrchenstrukturen mit einem größeren Durchmesser und der 100 kleinsten Kohlenstoffnanoröhrchenstrukturen mit einem kleineren Durchmesser bei Betrachtung der positiven Elektrode durch REM entspricht.

5. Positive Elektrode nach Anspruch 1, wobei die Kohlenstoffnanoröhrchenstrukturen einen durchschnittlichen Durchmesser von 50 nm bis 120 nm aufweisen, wobei der durchschnittliche Durchmesser einem Durchschnittswert der Durchmesser der 100 größten Kohlenstoffnanoröhrchenstrukturen mit einem größeren Durchmesser und der 100 kleinsten Kohlenstoffnanoröhrchenstrukturen mit einem kleineren Durchmesser bei Betrachtung der positiven Elektrode durch REM entspricht.

6. Positive Elektrode nach Anspruch 1, wobei in den Kohlenstoffnanoröhrchenstrukturen die einwandigen Kohlenstoffnanoröhrcheneinheiten einen durchschnittlichen Durchmesser von 0,5 nm bis 5 nm aufweisen, wobei der durchschnittliche Durchmesser einem Durchschnittswert der Durchmesser der 100 größten einwandigen Kohlenstoffnanoröhrcheneinheiten mit einem größeren Durchmesser und der 100 kleinsten einwandigen Kohlenstoffnanoröhrcheneinheiten mit einem kleineren Durchmesser bei Betrachtung der positiven Elektrode durch TEM entspricht.

7. Positive Elektrode nach Anspruch 1, wobei in den Kohlenstoffnanoröhrchenstrukturen 50 bis 4.000 einwandige Kohlenstoffnanoröhrcheneinheiten aneinander gebunden sind.

8. Positive Elektrode nach Anspruch 1, wobei die erste Aktivmaterialschicht für eine positive Elektrode das erste Aktivmaterial für eine positive Elektrode und ein erstes leitfähiges Mittel umfasst und das erste leitfähige Mittel mindestens eines von den Kohlenstoffnanoröhrchenstrukturen, mehrwandigen Kohlenstoffnanoröhrcheneinheiten und Ruß umfasst.

9. Positive Elektrode nach Anspruch 1, wobei die erste Aktivmaterialschicht für eine positive Elektrode eine Dicke von 1 µm bis 100 µm aufweist.

10. Positive Elektrode nach Anspruch 1, wobei die zweite Aktivmaterialschicht für eine positive Elektrode eine Dicke von 1 µm bis 100 µm aufweist.

11. Sekundärbatterie, umfassend die positive Elektrode nach einem der Ansprüche 1 bis 10.

## Revendications

1. Électrode positive comprenant un collecteur d'électrode positive, une première couche de matériau actif d'électrode positive qui est disposée sur le collecteur d'électrode positive et inclut un premier matériau actif d'électrode positive et une seconde couche de matériau d'électrode positive disposée sur la première couche de matériau actif d'électrode positive,
dans laquelle la seconde couche de matériau actif d'électrode positive comprend un second matériau actif d'électrode positive, et
des structures de nanotube de carbone dans lesquelles 2 à 5 000 unités de nanotube de carbone monoparoi sont liées côte à côte dans chaque structure de nanotube de carbone,
dans laquelle les structures de nanotube de carbone sont incluses dans une quantité de 0,01 % en poids à 1,0 % en poids dans la seconde couche de matériau actif d'électrode positive, et
dans laquelle les structures de nanotube de carbone sont interconnectées dans la seconde couche de matériau actif d'électrode positive pour former une structure de réseau.

2. Électrode positive selon la revendication 1, dans laquelle les structures de nanotube de carbone présentent une longueur moyenne de 1 µm à 500 µm, dans laquelle la longueur moyenne correspond à une valeur moyenne de longueurs des 100 premières structures de nanotube de carbone avec une longueur plus importante et des 100 dernières structures de nanotube de carbone avec une longueur plus petite lorsque l'électrode positive est observée par MEB.

3. Électrode positive selon la revendication 1, dans laquelle les structures de nanotube de carbone présentent une longueur moyenne de 10 µm à 70 µm, dans laquelle la longueur moyenne correspond à une valeur moyenne de longueurs des 100 premières structures de nanotube de carbone avec une longueur plus importante et des 100 dernières structures de nanotube de carbone avec une longueur plus petite lorsque l'électrode positive est observée par MEB.

4. Électrode positive selon la revendication 1, dans laquelle les structures de nanotube de carbone présentent un diamètre moyen de 2 nm à 200 nm, dans laquelle le diamètre moyen correspond à une valeur moyenne des diamètres des 100 premières structures de nanotube de carbone avec un diamètre plus important et des 100 dernières structures de nanotube de carbone avec un diamètre plus petit lorsque l'électrode positive est observée par MEB.

5. Électrode positive selon la revendication 1, dans laquelle les structures de nanotube de carbone présentent un diamètre moyen de 50 nm à 120 nm, dans laquelle le diamètre moyen correspond à une valeur moyenne des diamètres des 100 premières structures de nanotube de carbone avec un diamètre plus important et des 100 dernières structures de nanotube de carbone avec un diamètre plus petit lorsque l'électrode positive est observée par MEB.

6. Électrode positive selon la revendication 1, dans laquelle, dans les structures de nanotube de carbone, les unités de nanotube de carbone monoparoi présentent un diamètre moyen de 0,5 nm à 5 nm, dans laquelle le diamètre moyen correspond à une valeur moyenne des diamètres des 100 premières structures de nanotube de carbone avec un diamètre plus important et des 100 dernières structures de nanotube de carbone avec un diamètre plus petit lorsque l'électrode positive est observée par MET.

7. Électrode positive selon la revendication 1, dans laquelle, dans les structures de nanotube de carbone, 50 à 4 000 unités de nanotube de carbone monoparoi sont liées les unes aux autres.

8. Électrode positive selon la revendication 1, dans laquelle la première couche de matériau actif d'électrode positive comprend le premier matériau actif d'électrode positive et un premier agent conducteur, et le premier agent conducteur comprend au moins une des structures de nanotube de carbone, des unités de nanotube de carbone multiparoi, et du noir de carbone.

9. Électrode positive selon la revendication 1, dans laquelle la première couche de matériau d'électrode positive présente une épaisseur de 1 µm à 100 µm.

10. Électrode positive selon la revendication 1, dans laquelle la seconde couche de matériau actif d'électrode positive présente une épaisseur de 1 µm à 100 µm.

11. Accumulateur comprenant l'électrode positive selon l'une quelconque des revendications 1 à 10.
